# EUROPEAN PATENT APPLICATION

(11) **EP 4 629 111 A1**
(43) Date of publication of application: **08.10.2025**
(21) Application number: 22967124.3
(22) Date of filing: 29.11.2022
(51) Int. Cl.: G06F 21/31, G06F 21/32

(54) **INFORMATION PROCESSING SYSTEM, INFORMATION PROCESSING DEVICE, INFORMATION PROCESSING METHOD, AND RECORDING MEDIUM**

(71) Applicant: NEC Corporation, 108-8001 Tokyo (JP)
(72) Inventor: HIJIKATA, Kohei, Tokyo 108-8001 (JP); SHIMIZU, Yuta, Tokyo 108-8001 (JP); INAGAKI, Kazuki, Tokyo 108-8001 (JP); SHIBATA, Koyo, Tokyo 108-8001 (JP)
(74) Representative: Betten & Resch
(86) International application number: PCT/JP2022/044026
(87) International publication number: WO 2024/116290

(57) **Abstract**

An information processing system includes: an image acquisition unit that acquires an image of a target moving from an inside to an outside of a predetermined area; a tracking unit that performs tracking of the target included in the image; and a control unit that controls an authentication level of authentication processing to be performed on the target moving from the outside to the inside of the predetermined area, based on a result of the tracking. According to this information processing system, it is possible to appropriately perform the authentication processing on the target entering and leaving the predetermined area.

## Description

### Technical Field

The present disclosure relates to technical fields of an information processing system, an information processing apparatus, an information processing method, and a recording medium.

### Background Art

A system that performs authentication processing to permit a target to pass (e.g., to unlock a locked door) is known. For example, Patent Literature 1 discloses: acquiring a face image of a target approaching a vehicle; and unlocking a vehicle door based on the face image. Patent Literature 2 discloses: performing authentication processing by using an image authentication technique/technology such as face recognition and motion recognition; and controlling a locking apparatus installed on each door of a vehicle.

As another related technique/technology, Patent Literature 3 discloses object tracking performed by detecting an object outside a vehicle.

### Citation List

### Patent Literature

Patent Literature 1: JP2022-534284A
Patent Literature 2: JP2020-100963A
Patent Literature 3: International Publication No. WO2020/250584

### Summary

### Technical Problem

The present disclosure aims to improve the techniques/technologies disclosed in Citation List.

### Solution to Problem

An information processing system according to an example aspect of the present disclosure includes: an image acquisition unit that acquires an image of a target moving from an inside to an outside of a predetermined area; a tracking unit that performs tracking of the target included in the image; and a control unit that controls an authentication level of authentication processing to be performed on the target moving from the outside to the inside of the predetermined area, based on a result of the tracking.

An information processing apparatus according to an example aspect of the present disclosure includes: an image acquisition unit that acquires an image of a target moving from an inside to an outside of a predetermined area; a tracking unit that performs tracking of the target included in the image; and a control unit that controls an authentication level of authentication processing to be performed on the target moving from the outside to the inside of the predetermined area, based on a result of the tracking.

An information processing method according to an example aspect of the present disclosure is an information processing method that is executed by at least one computer, the information processing method including: acquiring an image of a target moving from an inside to an outside of a predetermined area; performing tracking of the target included in the image; and controlling an authentication level of authentication processing to be performed on the target moving from the outside to the inside of the predetermined area, based on a result of the tracking.

A recording medium according to an example aspect of the present disclosure is a recording medium on which a computer program that allows at least one computer to execute an information processing method is recorded, the information processing method including: acquiring an image of a target moving from an inside to an outside of a predetermined area; performing tracking of the target included in the image; and controlling an authentication level of authentication processing to be performed on the target moving from the outside to the inside of the predetermined area, based on a result of the tracking.

### Brief Description of Drawings

[FIG. 1] FIG. 1 is a block diagram illustrating a hardware configuration of an information processing system according to a first example embodiment.
[FIG. 2] FIG. 2 is a block diagram illustrating a functional configuration of the information processing system according to the first example embodiment.
[FIG. 3] FIG. 3 is a flowchart illustrating a flow of operation of the information processing system according to the first example embodiment.
[FIG. 4] FIG. 4 is a plan view illustrating an example of face authentication in an information processing system according to a second example embodiment.
[FIG. 5] FIG. 5 is a conceptual diagram illustrating an example of setting an authentication level in an information processing system according to a third example embodiment.
[FIG. 6] FIG. 6 is a block diagram illustrating a functional configuration of an information processing system according to a fourth example embodiment.
[FIG. 7] FIG. 7 is a flowchart illustrating a flow of operation of the information processing system according to the fourth example embodiment.
[FIG. 8] FIG. 8 is a flowchart illustrating a flow of an authentication necessity determining operation in an information processing system according to a fifth example embodiment.
[FIG. 9] FIG. 9 is a flowchart illustrating a flow of operation of an information processing system according to a sixth example embodiment.
[FIG. 10] FIG. 10 is a block diagram illustrating a functional configuration of an information processing system according to a seventh example embodiment.
[FIG. 11] FIG. 11 is a flowchart illustrating a flow of a door control operation in the information processing system according to the seventh example embodiment.
[FIG. 12] FIG. 12 is a block diagram illustrating a functional configuration of an information processing system according to an eighth example embodiment.
[FIG. 13] FIG. 13 is a flowchart illustrating a flow of operation of the information processing system according to the eighth example embodiment.
[FIG. 14] FIG. 14 is a block diagram illustrating a functional configuration of an information processing system according to a ninth example embodiment.
[FIG. 15] FIG. 15 is a flowchart illustrating a flow of operation of the information processing system according to the ninth example embodiment.
[FIG. 16] FIG. 16 is a table illustrating an example of setting an authentication level in the information processing system according to the ninth example embodiment.
[FIG. 17] FIG. 17 is a block diagram illustrating a functional configuration of an information processing system according to a tenth example embodiment.
[FIG. 18] FIG. 18 is a flowchart illustrating a flow of operation of the information processing system according to the tenth example embodiment.
[FIG. 19] FIG. 19 is a block diagram illustrating a functional configuration of an information processing apparatus according to an eleventh example embodiment.

### Description of Example Embodiments

Hereinafter, an information processing system, an information processing apparatus, an information processing method, and a recording medium according to example embodiments will be described with reference to the drawings.

### <First Example Embodiment>

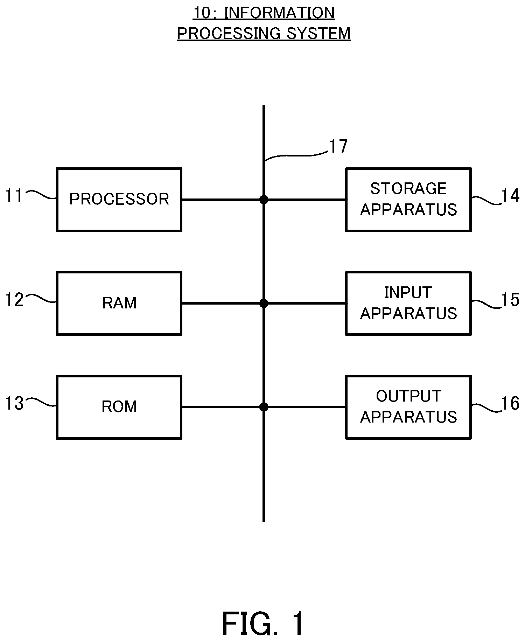

An information processing system according to a first example embodiment will be described with reference to FIG. 1 to FIG. 3.

### (Hardware Configuration)

First, with reference to FIG. 1, a hardware configuration of the information processing system according to the first example embodiment will be described. FIG. 1 is a block diagram illustrating the hardware configuration of the information processing system according to the first example embodiment.

As illustrated in FIG. 1, an information processing system 10 according to the first example embodiment includes a processor 11, a RAM (Random Access Memory) 12, a ROM (Read Only Memory) 13, and a storage apparatus 14. The information processing system 10 may further include an input apparatus 15 and an output apparatus 16. The processor 11, the RAM 12, the ROM 13, the storage apparatus 14, the input apparatus 15, and the output apparatus 16 are connected via a data bus 17.

The processor 11 reads a computer program. For example, the processor 11 is configured to read a computer program stored in at least one of the RAM 12, the ROM 13, and the storage apparatus 14. Alternatively, the processor 11 may read a computer program stored on a computer-readable recording medium. by using a not-illustrated recording medium reading apparatus. The processor 11 may acquire (i.e., may read) a computer program from a not-illustrated apparatus disposed outside the information processing system 10 via a network interface. The processor 11 controls the RAM 12, the storage apparatus 14, the input apparatus 15, and the output apparatus 16 by executing the read computer program. Especially in the present example embodiment, when the processor 11 executes the read computer program, a function block for tracking a target and controlling an authentication level is realized in the processor 11. That is, the processor 11 may function as a controller for executing each control in the information processing system 10.

The processor 11 may be, for example, a CPU (Central Processing Unit), a GPU (Graphics Processing Unit), a FPGA (Field-Programmable Gate Array), a DSP (Digital Signal Processor), an ASIC (Application Specific Integrated Circuit), and a quantum processor. The processor 11 may be one of them, or may use a plurality of them in parallel.

The RAM 12 temporarily stores the computer program to be executed by the processor 11. The RAM 12 temporarily stores data that are temporarily used by the processor 11 when the processor 11 executes the computer program. The RAM 12 may be, for example, a D-RAM (Dynamic Random Access Memory) or a SRAM (Static Random Access Memory). Furthermore, another type of volatile memory may be used in place of the RAM 12.

The ROM 13 stores the computer program to be executed by the processor 11. The ROM 13 may also store fixed data. The ROM 13 may be, for example, a P-ROM (Programmable Read Only Memory) or an EPROM (Erasable Read Only Memory). In addition, another type of nonvolatile memory may be used in place of the ROM 13.

The storage apparatus 14 stores data that are stored by the information processing system 10 for a long time. The storage apparatus 14 may operate as a temporary/transitory storage apparatus of the processor 11. The storage apparatus 14 may include, for example, at least one of a hard disk apparatus, a magneto-optical disk apparatus, a SSD (Solid State Drive), and a disk array apparatus.

The input apparatus 15 is an apparatus that receives an input instruction from a user of the information processing system 10. The input apparatus 15 may include, for example, at least one of a keyboard, a mouse, and a touch panel. The input apparatus 15 may be configured as a portable terminal such as a smartphone and a tablet. The input apparatus 15 may be an apparatus that allows audio input/voice input, including a microphone, for example.

The output apparatus 16 is an apparatus that outputs information about the information processing system 10 to the outside. For example, the output apparatus 16 may be a display apparatus (e.g., a display) that is configured to display the information about the information processing system 10. The output apparatus 16 may also be a speaker or the like that is configured to audio-output the information about the information processing system 10. The output apparatus 16 may be configured as a portable terminal such as a smartphone and a tablet. The output apparatus 16 may also be an apparatus that outputs information in a format other than an image. For example, the output apparatus 16 may be a speaker that audio-outputs the information about the information processing system 10.

Although FIG. 1 illustrates an example of the information processing system 10 including a plurality of apparatuses, all or a part of these functions may be realized by a single apparatus (an information processing apparatus). In that case, the information processing apparatus may include, for example, only the processor 11, the RAM 12, and the ROM 13. The other components (i.e., the storage apparatus 14, the input apparatus 15, and the output apparatus 16) may be provided in an external apparatus connected to the information processing apparatus. In addition, in the information processing apparatus, a part of an arithmetic function may be realized by an external apparatus (e.g., an external server or cloud, etc.).

### (Functional Configuration)

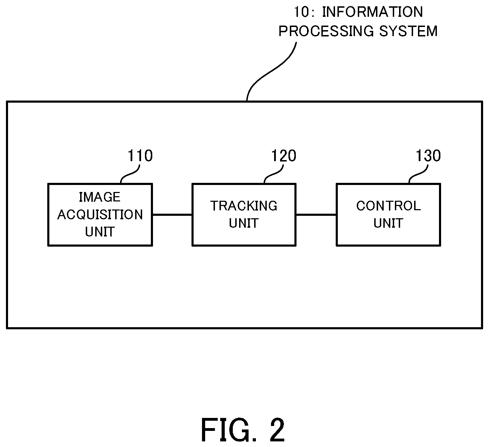

Next, with reference to FIG. 2, a functional configuration of the information processing system 10 according to the first example embodiment will be described. FIG. 2 is a block diagram illustrating the functional configuration of the information processing system according to the first example embodiment.

As illustrated in FIG. 2, the information processing system 10 according to the first example embodiment includes, as components for realizing the functions thereof, an image acquisition unit 110, a tracking unit 120, and a control unit 130. Each of the image acquisition unit 110, the tracking unit 120, and the control unit 130 may be a processing block realized by the processor 11 (see FIG. 1), for example.

The image acquisition unit 110 is configured to acquire an image including a target (hereinafter referred to as a "target image"). The term "target" here is not limited to humans, and may include animals such as, for example, dogs and cats, and robots or the like. The image acquisition unit 110 acquires the image of the target moving from an inside to an outside of a predetermined area. The image acquisition unit 110 may acquire not only an image at a time at which the target moves from the inside to the outside of the predetermined area, but also an image before moving (i.e., an image of the target before moving to the outside of the predetermined area) and an image after moving (i.e., an image of the target after moving to the outside of the predetermined area). The image acquisition unit 110 may also acquire an image to be used for authentication processing described later.

The image acquisition unit 110 acquires the target image, for example, from a camera that captures the target. The camera that captures the target image may be a camera provided in the information processing system 10, or a camera external to the information processing system. The camera may be a visible light camera or a near-infrared camera. The image acquisition unit 110 may be configured to acquire images from a plurality of cameras. In this case, the plurality of cameras may be different types of cameras (e.g., cameras with different image capturing ranges, image capturing angles, image capturing qualities, etc.). The target image acquired by the image acquisition unit 110 is outputted to the tracking unit 120.

The tracking unit 120 is configured to use the target image acquired by the image acquisition unit 110 to perform tracking of the target (i.e., processing of tracking a position of the target) included in the image. Since the tracking using the image may adopt various existing techniques/technologies as appropriate, a detailed description of a specific method thereof is omitted here. The tracking unit 120 continues to track the target after the target moves outside the predetermined area. The tracking unit 120 may perform the tracking of the target, by using a plurality of frames of images (i.e., a video) acquired by the image acquisition unit 110. A result of the tracking by the tracking unit 120 (hereinafter referred to as a "tracking result") is outputted to the control unit 130.

The control unit 130 is configured to control an authentication level of authentication processing to be performed on the target moving from the outside to the inside of the predetermined area, based on the tracking result obtained by the tracking unit 120. The target on which the authentication processing is performed, may be, for example, a target intending to move from the inside to the outside of the predetermined area and then return from the outside to the inside of the predetermined area. Here, the "authentication level" may be a level indicating authentication accuracy. For example, the authentication level may be such that the authentication accuracy is higher at a higher level, and such that the authentication accuracy is lower at a lower level. When the authentication level is high (i.e., when the authentication accuracy is high), another person is less likely to be mistakenly accepted, which may improve security performance. On the other hand, when the authentication level is unnecessarily set too high, a correct person is more likely to be rejected, which may hinder a user's convenience. When the authentication level is low (i.e., when the authentication accuracy is low), a correct person is less likely to be rejected, which may improve the user's convenience. On the other hand, when the authentication level is unnecessarily set too low, another person is more likely to be mistakenly accepted, which may reduce the security performance. The authentication level may be controlled by changing an authentication threshold used to determine a success or a failure in the authentication processing, for example. In this case, the control unit 130 may increase the authentication threshold when raising the authentication level, and may reduce the authentication threshold when lowering the authentication level. Alternatively, the authentication level may be controlled by changing necessity of the authentication processing. In this case, the control unit 130 may set the authentication processing necessary when raising the authentication level, and may set the authentication processing unnecessary when lowering the authentication level. Alternatively, the authentication level may be controlled by changing the number (type) of the authentication processing. In this case, the control unit 130 may increase the number of the authentication processing when raising the authentication level, and may reduce the number of the authentication processing when lowering the authentication level.

The authentication processing described above may be performed by the control unit 130. That is, the control unit 130 may have a function of performing the authentication processing on the target. In this case, the control unit 130 may acquire information to be used for the authentication processing and may perform the authentication processing based on the controlled authentication level. Alternatively, the authentication processing may be processing performed by an authentication apparatus external to the information processing system 10. In this case, the control unit 130 may transmit the information to be used for the authentication processing and information about the authentication level, to the external authentication apparatus, and may then receive an authentication result from the authentication apparatus. The control unit 130 may also have a function of outputting various information about the authentication processing (e.g., information to be used for authentication, information about the controlled authentication level, information about the authentication result, etc.) to the target. The control unit 130 may cause a display provided by the output apparatus 16 (see FIG. 1) to display various information about the authentication processing. Alternatively, the control unit 130 may also cause a speaker provided by the output apparatus 16 to audio-output various information about the authentication processing.

The authentication processing may be processing performed to permit the target to move from the outside to the inside of the predetermined area. For example, when the authentication processing of the target is successful, processing of opening a gate to pass through when moving to the inside of the predetermined area or of unlocking a locked door may be performed. The information processing system 10 may be configured to perform the processing for permitting the movement of the target as described above. That is, the information processing system 10 may be configured to have a function of controlling a gate, a door lock, or the like. The predetermined area is not particularly limited, but examples thereof include buildings or facilities requiring entry permission (e.g., companies or apartment buildings with entrance gates), rooms requiring room entry permission, and moving bodies (e.g., automobiles, etc.). In another example embodiment described later, a configuration in a case where the predetermined area is a moving body, will be described in detail.

### (Flow of Operation)

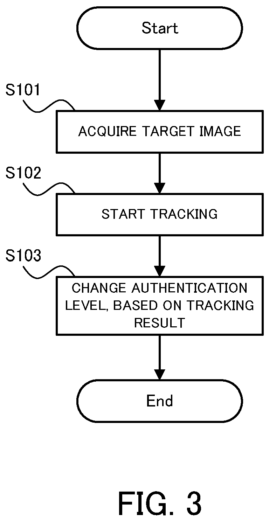

Next, with reference to FIG. 3, a flow of operation of the information processing system 10 according to the first example embodiment will be described. FIG. 3 is a flowchart illustrating the flow of the operation of the information processing system according to the first example embodiment.

As illustrated in FIG. 3, when the operation of the information processing system 10 according to the first example embodiment is started, first, the image acquisition unit 110 acquires the image of the target moving from the inside to the outside of the predetermined area (step S101). The target image may be captured only when the target moving from the inside to the outside of the predetermined area is detected. Alternatively, the target image may be captured all the time, and the image captured when the target moving from the inside to the outside of the predetermined area is detected, may be acquired by the image acquisition unit 110.

Then, the tracking unit 120 performs the tracking of the target, by using the target image acquired by the image acquisition unit 110 (step S102). The tracking unit 120 may stop the tracking when it loses sight of the target being tracked. After that, the tracking unit 120 may restart the tracking when it detects the lost target. The tracking unit 120 may stop the tracking after a lapse of a predetermined period from the start of the tracking.

Then, the control unit 130 controls the authentication level of the authentication processing to be performed on the target moving from the outside to the inside of the predetermined area, based on the tracking result obtained by the tracking unit 120 (step S103). The control unit 130 may change the authentication level at a time of performing the authentication processing. Alternatively, the control unit 130 may change the authentication level at any time, while tracking the target. In this case, the control unit 130 may change the authentication level at each time when the tracking result changes. Alternatively, the control unit 130 may change the authentication level at predetermined intervals. When the authentication processing of the target being tracked is completed, the control unit 130 may end the control of the authentication level.

### (Technical Effect)

Next, a technical effect obtained by the information processing system 10 according to the first example embodiment will be described.

As described in FIG. 1 to FIG. 3, in the information processing system 10 according to the first example embodiment, the tracking of the target moving from the inside to the outside of the predetermined area is performed, and the authentication level of the authentication processing is changed based on the tracking result. By changing the authentication level in this way, it is possible to perform appropriate authentication processing on the target entering and exiting the predetermined area in a relatively short time. For example, the necessity for the authentication processing is considered to be low, for the target intending to return to the inside of the predetermined area immediately after moving to the outside of the predetermined area. Therefore, the information processing system 10 according to the present example embodiment lowers the authentication level and makes the authentication processing easily successful, for the target who can be tracked without being lost after exiting the predetermined area and for whom the necessity of the authentication processing is considered to be low. On the other hand, the information processing system 10 according to the present example embodiment raises the authentication level and performs the authentication processing, for the target who cannot be accurately tracked after exiting the predetermined area and for whom the necessity of the authentication processing is considered to be high. In this way, it is possible to perform appropriate authentication processing without unnecessarily increasing a burden on the target.

### <Second Example Embodiment>

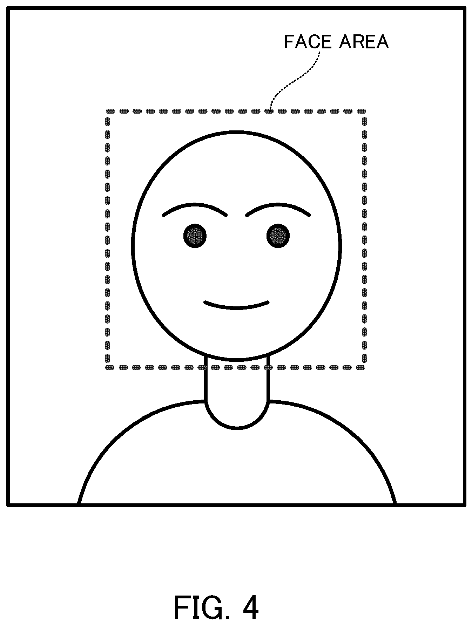

The information processing system 10 according to a second example embodiment will be described with reference to FIG. 4. The second example embodiment describes a specific example of the authentication processing, and may be the same as the first example embodiment in the system configuration and overall operation flow. For this reason, a part differing from the already described first example embodiment will be described in detail below, and a description of the other overlapping parts will be omitted as appropriate.

### (Biometric Authentication)

First, with reference to FIG. 4, biometric authentication performed by the information processing system 10 according to the second example embodiment will be described. FIG. 4 is a plan view illustrating an example of face authentication in the information processing system according to the second example embodiment.

In the information processing system 10 according to the second example embodiment, the control unit 130 is configured to control the authentication level of the biometric authentication. The biometric authentication is intended to perform authentication by using biometric information on the target, and examples thereof include face authentication using a face, iris authentication using an iris, and fingerprint authentication using fingerprints, and the like.

As illustrated in FIG. 4, the information processing system 10 according to the second example embodiment may be configured to perform the face authentication. When the face authentication is performed, the image acquisition unit 110 may acquire a face image of the target moving from the outside to the inside of the predetermined area. Then, the control unit 130 may perform the face authentication based on the face image acquired by the image acquisition unit 110. When the face authentication is performed, first, a face area in which there is a face of the target is detected from the face image. The face area may be detected as a rectangular area including the face of the target, such as an area enclosed by a broken line in the drawing. Then, a feature quantity of the face may be extracted from the detected face area. The extracted feature quantity of the face may then be collated/verified with a pre-registered face feature quantity, thereby to perform the face authentication. Specifically, it may be determined whether or not a score indicating a degree of matching between the extracted feature quantity of the face and the registered feature quantity of the face exceeds a predetermined authentication threshold. In this case, the control unit 130 may control an authentication level of the face authentication by changing the authentication threshold.

The information processing system 10 according to the second example embodiment may perform a plurality of types of biometric authentication. For example, the information processing system 10 may perform each of the face authentication and the iris authentication. In this case, the control unit 130 may control an authentication level of the biometric authentication by changing an authentication threshold of one of the face authentication and the iris authentication. Alternatively, the control unit 130 may control the authentication level of the biometric authentication by changing both the authentication thresholds of the face authentication and the iris authentication. Alternatively, the control unit 130 may control the authentication level of the biometric authentication by setting one of the face authentication and the iris authentication unnecessary.

### (Technical Effect)

Next, a technical effect obtained by the information processing system 10 according to the second example embodiment will be described.

As described in FIG. 4, in the information processing system 10 according to the second example embodiment, the authentication level of the biometric authentication is changed based on the tracking result of the target. In this way, it is possible to perform appropriate biometric authentication on the target temporarily moving to the outside of the predetermined area, without unnecessarily increasing the burden on the target.

### <Third Example Embodiment>

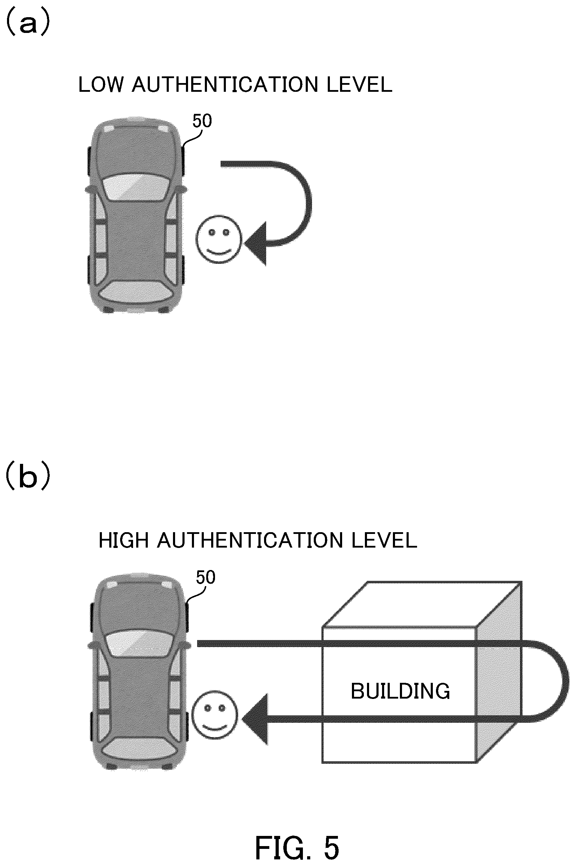

The information processing system 10 according to a third example embodiment will be described with reference to FIG. 5. The third example embodiment describes a specific example of the predetermined area, and may be the same as the first and second example embodiments in the system configuration and overall operation flow. For this reason, a part differing from each of the example embodiments described above will be described in detail below, and a description of the other overlapping parts will be omitted as appropriate.

### (Authentication Processing in Moving Body)

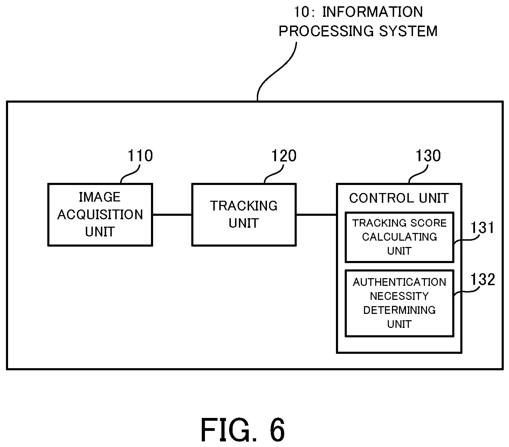

First, with reference to FIG. 5, a specific example of guide information in the information processing system 10 according to the third example embodiment will be described. FIG. 6 is a plan view illustrating an example of the guide information in the information processing system according to the third example embodiment.

In the information processing system 10 according to the third example embodiment, an inside of the moving body is set as the inside of the predetermined area, and an outside of the moving body is set as the outside of the predetermined area. That is, in the information processing system 10 according to the third example embodiment, the image acquisition unit 110 acquires the image of the target moving from the inside to the outside of the moving body, and the tracking unit 120 performs the tracking of the target exiting the moving body. Then, the control unit 130 controls the authentication level of the authentication processing to be performed on the target moving from the outside to the inside of the moving body.

As illustrated in FIG. 5, the moving body may be a vehicle 50. In this case, when a passenger of the vehicle 50 gets out of the vehicle 50, the image acquisition unit 110 acquires an image of the passenger, and the tracking unit 120 performs the tracking of the passenger who gets out of the vehicle 50. The authentication processing is performed as processing for unlocking a locked door of the vehicle 50, for example. That is, the authentication processing is performed when the passenger returns to the vehicle 50, and in a case where the authentication processing is successful, the locked door is unlocked. In this case, not only is the locked door unlocked, but control of automatically opening the door may also be performed.

As already described, the authentication level of the authentication processing is controlled based on the tracking result. For example, when the tracking can be performed without losing sight of the target, the control unit 130 sets the authentication level low and makes the authentication processing easily successful. Specifically, as illustrated in FIG. 5(a), in a case where the passenger who gets out of the vehicle 50 is likely to return immediately, the authentication level may be set low. On the other hand, when losing sight of the target during the tracking, the control unit 130 sets the authentication level high and makes the authentication processing hardly successful. As illustrated in FIG. 5(b), in a case where the passenger who gets out of the vehicle 50 enters a building (i.e., becomes not-trackable) and returns to the vehicle 50 after a while, the authentication level may be set high.

### (Technical Effect)

Next, a technical effect obtained by the information processing system 10 according to the third example embodiment will be described.

As described in FIG. 6, in the information processing system 10 according to the third example embodiment, the authentication level of the authentication processing for the passenger who returns to the moving body is controlled based on the tracking result of the passenger who gets out of the moving body. In this way, it is possible to perform appropriate biometric authentication on the target having been away from the moving body for a relatively short time, without unnecessarily increasing the burden on the target.

In the present example embodiment, the vehicle 50 is given as an example of the moving body, but the moving body is not limited to the vehicle 50. For example, the moving body may be a train, a ship, an airplane, or the like. In the following example embodiments, a description will be given by exemplifying a configuration in which the moving body (mainly, the vehicle) described in the third example embodiment is set as the predetermined area.

### <Fourth Example Embodiment>

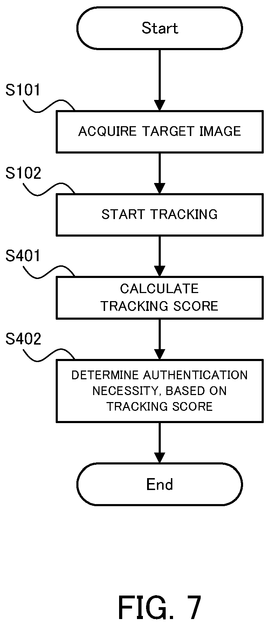

The information processing system 10 according to a fourth example embodiment will be described with reference to FIG. 6 and FIG.7. The fourth example embodiment partially differs from the first to third example embodiments only in its configuration and operation, and may be the same as the first to third example embodiments in the other parts. For this reason, a part differing from each of the example embodiments described above will be described in detail below, and a description of the other overlapping parts will be omitted as appropriate.

### (Functional Configuration)

First, with reference to FIG. 6, a functional configuration of the information processing system 10 according to the fourth example embodiment will be described. FIG. 6 is a block diagram illustrating the functional configuration of the information processing system according to the fourth example embodiment. In FIG. 6, the same components as those illustrated in FIG. 2 carry the same reference numerals.

As illustrated in FIG. 6, the information processing system 10 according to the fourth example embodiment includes, as components for realizing the functions thereof, the image acquisition unit 110, the tracking unit 120, and the control unit 130. In particular, the control unit 130 according to the fourth example embodiment includes a tracking score calculating unit 131 and an authentication necessity determining unit 132.

The tracking score calculating unit 131 is configured to calculate a tracking score indicating reliability of the tracking, based on the tracking result of the tracking unit 120. The tracking score calculating unit 131 may calculate the tracking score as a high value, when the tracking is performed without losing sight of the target. On the other hand, the tracking score calculating unit 131 may calculate the tracking score as a low value, when the target is lost during the tracking. More specifically, the tracking score calculating unit 131 may perform processing of reducing the tracking score at each time of occurrence of a state in which the target goes out of the image capturing range of the camera, a state in which the target is hidden behind an obstruction and no longer is seen, or a similar state. The tracking score calculated by the tracking score calculating unit 131 is outputted to the authentication necessity determining unit 132.

The authentication necessity determining unit 132 determines the necessity of the authentication processing when the target moves from the outside to the inside of the moving body, depending on the tracking score calculated by the tracking score calculating unit 131. For example, when the tracking score is higher than a predetermined score, the authentication necessity determining unit 132 may unlock the locked door of the moving body without performing the authentication processing. In this case, the authentication level is substantially low. In addition, when the tracking score is lower than the predetermined score, the authentication determination unit 132 may unlock the locked door of the moving body, only if the authentication processing is successful. In this case, the authentication level is higher than that when the authentication processing is not performed. When a plurality of types of authentication processing is performed, the authentication determination unit 132 may determine the necessity of the authentication processing for each of the plurality of types of authentication processing.

### (Flow of Operation)

Next, with reference to FIG. 7, a flow of operation of the information processing system 10 according to the fourth example embodiment will be described. FIG. 7 is a flowchart illustrating the flow of the operation of the information processing system according to the fourth example embodiment. In FIG. 7, the same steps as those illustrated in FIG. 3 carry the same reference numerals.

As illustrated in FIG. 7, when the operation of the information processing system 10 according to the fourth example embodiment is started, first, the image acquisition unit 110 acquires the image of the target moving from the inside to the outside of the moving body (step S101). Then, the tracking unit 120 performs the tracking of the target getting out of the moving body, by using the target image acquired by the image acquisition unit 110 (step S102).

Then, the tracking score calculating unit 131 calculates the tracking score, based on the tracking result obtained by the tracking unit 120 (step S401). Then, the authentication necessity determining unit 132 determines the necessity of the authentication processing, depending on the tracking score calculated by the tracking score calculating unit 131 (step S402). A more specific configuration when the necessity of the authentication processing is determined, will be described in detail in another example embodiment later.

### (Technical Effect)

Next, a technical effect obtained by the information processing system 10 according to the fourth example embodiment will be described.

As described in FIG. 6 and FIG. 7, in the information processing system 10 according to the fourth example embodiment, the necessity of the authentication processing is determined based on the tracking score. In this way, it is possible to accurately control a success rate of the authentication processing, depending on the reliability of the tracking.

### <Fifth Example Embodiment>

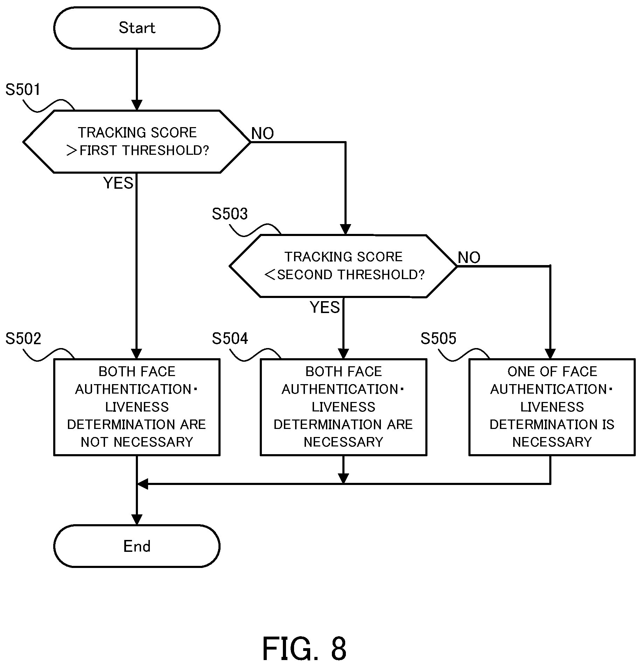

The information processing system 10 according to a fifth example embodiment will be described with reference to FIG. 8. The fifth example embodiment describes a specific example of an authentication necessity determining operation (i.e., the step S107 in FIG. 7) in the fourth example embodiment, and may be the same as the fourth example embodiment in the system configuration and overall operation flow. For this reason, a part differing from each of the example embodiments described above will be described in detail below, and a description of the other overlapping parts will be omitted as appropriate.

### (Authentication Necessity Determining Operation)

First, with reference to FIG. 8, a description will be given of the authentication necessity determining operation (i.e., the operation of determining the necessity of the authentication processing, based on the tracking score) in the information processing system 10 according to the fifth example embodiment. FIG. 8 is a flowchart illustrating a flow of the authentication necessity determining operation in the information processing system according to the fifth example embodiment.

The information processing system 10 according to the fifth example embodiment is configured to perform the face authentication (see FIG. 4) and liveness determination as the biometric authentication. The liveness determination is processing for determining whether or not the target is a living body. In other words, the liveness determination is processing for determining whether or not the target is impersonating someone else. A method for the liveness determination is not particularly limited, but it may be a method of determining whether or not the target is a living body, based on an analysis result of the target image. More specifically, the target may be instructed to perform a predetermined action (e.g., an action of moving the eyes from side to side), and in a case where the target moves as instructed, the target may be determined to be a living body.

As illustrated in FIG. 8, when the authentication necessity determining operation in the information processing system 10 according to the fifth example embodiment is started, first, the authentication necessity determining unit 132 determines whether or not the tracking score exceeds a first threshold (step S501). The "first threshold" here is a threshold set to determine that the reliability of the tracking is sufficiently high (e.g., there is an extremely high possibility that the target having got out of the moving body is the same as the target returning to the moving body).

When the tracking score exceeds the first threshold (the step S501: YES), the authentication necessity determining unit 132 determines that both the face authentication and the liveness determination are not necessary (step S502). In this case, the locked door of the moving body is unlocked without performing any of the face authentication and the liveness determination. That is, the target is permitted to move to the inside of the moving body without execution of the authentication processing of the target.

When the tracking score does not exceed the first threshold (the step S501: NO), the authentication requirement determination unit 132 determines whether or not the tracking score falls below a second threshold (step S503). The "second threshold" here is a lower value than the first threshold, and is set to determine that the reliability of the tracking is low (e.g., it cannot be guaranteed the target having got out of the moving body is the same as the target returning to the moving body).

When the tracking score falls below the second threshold (the step S503: YES), the authentication necessity determining unit 132 determines that both the face authentication and the liveness determination are necessary (step S504). In this case, in a case where both the face authentication and the liveness determination are successful, the locked door of the moving body are unlocked. That is, after execution of strict authentication processing of the target, the target is permitted to move to the inside of the moving body.

On the other hand, when the tracking score does not fall below the second threshold (the step S503: NO), the authentication necessity determining unit 132 determines that one of the face authentication and the liveness determination is necessary (step S505). In this case, in a case where at least one of the face authentication and the liveness determination is successful, the locked door of the moving body is unlocked. That is, after execution of simple authentication processing of the target, the target is permitted to move to the inside of the moving body.

### (Technical Effect)

Next, a technical effect obtained by the information processing system 10 according to the fifth example embodiment will be described.

As described in FIG. 8, in the information processing system 10 according to the fifth example embodiment, the necessity of the authentication processing is determined based on a magnitude relation between the tracking score and the plurality of thresholds. In this way, it is possible to accurately control a success rate of the authentication processing, depending on the reliability of the tracking. Specifically, when the tracking score is high, it is possible to permit the target to move to the inside of the moving body without increasing a burden on the user, by making all of the authentication processing unnecessary. When the tracking score is low, a success is required in all of the authentication processing, which makes it possible to prevent an inappropriate target (e.g., another person that is not an owner of the vehicle 50) from being permitted to move to the inside of the moving body. When the tracking score is moderate, a success is required in a part of the authentication processing, which makes it possible to prevent an inappropriate target from being permitted to move to the inside of the moving body, without significantly increasing the burden on the user.

Described in the above example embodiment is an example of performing two types of authentication processing, i.e., the face authentication and the liveness determination; however, the necessity of more types of authentication processing may be determined. That is, the necessity of three or more types of authentication processing may be determined as appropriate, depending on the tracking score, thereby to control a success rate of the authentication processing in a more detailed manner.

### <Sixth Example Embodiment>

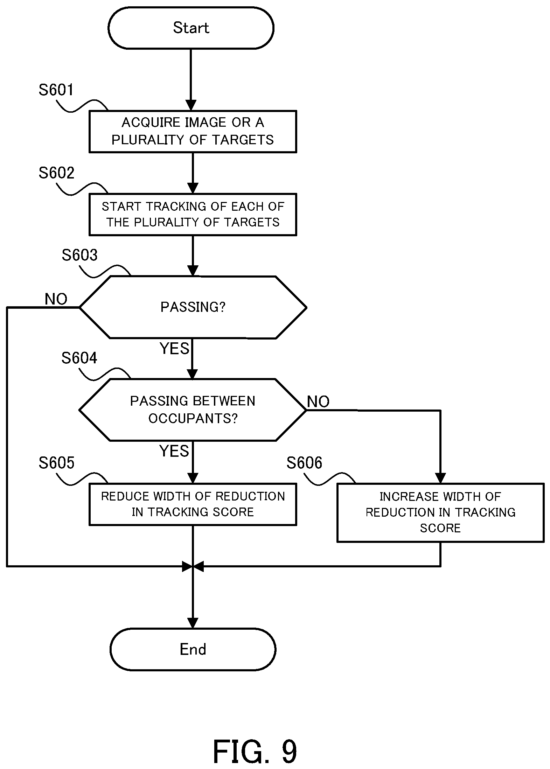

The information processing system 10 according to a sixth example embodiment will be described with reference to FIG. 9. The sixth example embodiment partially differs from the first to fifth example embodiments only in its operation, and may be the same as the first to fifth example embodiments in the other parts. For this reason, a part differing from each of the example embodiments described above will be described in detail below, and a description of the other overlapping parts will be omitted as appropriate.

### (Flow of operations)

Next, with reference to FIG. 9, a flow of operation of the information processing system 10 according to the sixth example embodiment will be described. FIG. 9 is a flowchart illustrating the flow of the operation of the information processing system according to the sixth example embodiment.

As illustrated in FIG. 9, when the operation of the information processing system 10 according to the sixth example embodiment is started, first, the image acquisition unit 110 acquires the image of plurality of a plurality of targets moving from the inside to the outside of the moving body (step S601). The plurality of targets here are, for example, passengers (e.g., a driver and an occupant) in the same vehicle 50. The image acquisition unit 110 may acquire a single image including all of the plurality of targets, or may acquire a plurality of images separately including the plurality of targets.

Then, the tracking unit 120 performs the tracking of the plurality of targets getting out of the moving body, by using the target image acquired by the image acquisition unit 110 (step S602). That is, the tracking is separately performed on each of the plurality of targets.

Then, the tracking score calculating unit 131 determines whether passing occurs, based on the tracking result of the plurality of targets (step S603). Here, the term "passing" refers to a state in which at least one of the plurality of targets is hidden behind another person and is thus hidden behind the camera. When the passing occurs, the tracking target may be replaced with another person, and it is considered that the reliability of the tracking is reduced. Therefore, the tracking score calculating unit 131 according to the present example embodiment performs processing of reducing the tracking score when the passing occurs. However, a width of reduction in the tracking score varies as follows, depending on the situation when the passing occurs.

When the passing does not occur (the step S603: NO), the subsequent processing may be omitted. That is, the tracking score calculating unit 131 may not perform the processing of reducing the tracking score. On the other hand, when the passing occurs (the step S603: YES), the tracking score calculating unit 131 determines whether or not the passing occurs between occupants (step S604). Whether or not the passing occurs between occupants, may be determined based on the tracking result of each of the plurality of targets.

When the passing occurs between occupants (the step S604: YES), the tracking score calculating unit 131 reduces the width of reduction in the tracking score due to the passing (step S605). This is because, in the case of the passing between occupants, even if the target is replaced with another person, the both are still the passengers of the moving body, and there is little need to make it hard for the authentication processing to be successful.

On the other hand, when the passing does not occur between occupants (i.e., the passing occurs with a third party who is not the occupant) (the step S604: NO), the tracking score calculating unit 131 increases the width of reduction in the tracking score due to the passing (step S606). When the passing does not occur between occupants, if the target is replaced, there is a possibility that a third party is permitted to move to the inside of the moving body. Therefore, it is necessary to make it hard for the authentication processing to be successful in the case of the target passing a third party.

### (Technical Effect)

Next, a technical effect obtained by the information processing system 10 according to the sixth example embodiment will be described.

As described in FIG. 9, in the information processing system 10 according to the sixth example embodiment, when the tracking target passes another person, the width of reduction in the tracking is changed depending on whether or not the passing occurs between occupants. **In** this way, it is possible to appropriately control a success rate of the authentication processing, by taking into account a degree of reduction in the reliability of the tracking due to the passing.

### <Seventh Example Embodiment>

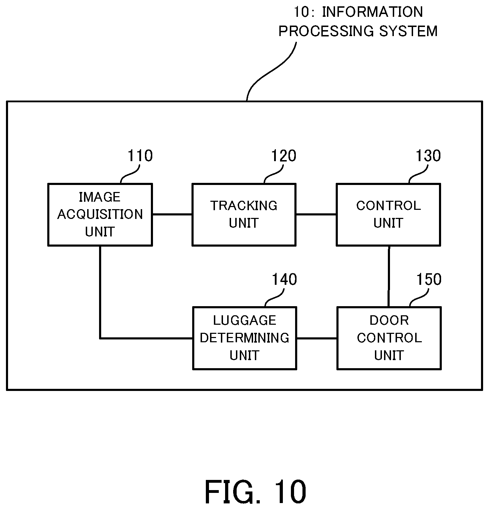

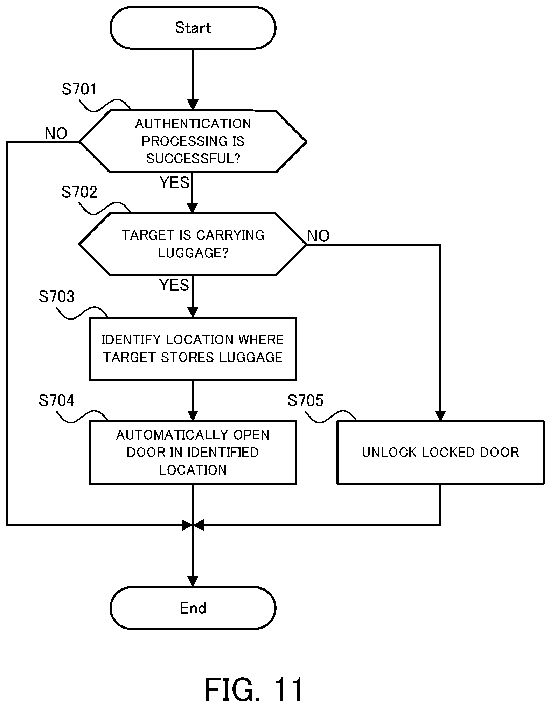

The information processing system 10 according to a seventh example embodiment will be described with reference to FIG. 10 and FIG. 11. The seventh example embodiment partially differs from the first to sixth example embodiments only in its configuration and operation, and may be the same as the first to sixth example embodiments in the other parts. For this reason, a part differing from each of the example embodiments described above will be described in detail below, and a description of the other overlapping parts will be omitted as appropriate.

### (Functional Configuration)

First, with reference to FIG. 10, a functional configuration of the information processing system 10 according to the seventh example embodiment will be described. FIG. 10 is a block diagram illustrating the functional configuration of the information processing system according to the seventh example embodiment. **In** FIG. 10, the same components as those illustrated in FIG. 2 carry the same reference numerals.

As illustrated in FIG. 10, the information processing system 10 according to the seventh example embodiment includes, as components for realizing the functions thereof, the image acquisition unit 110, the tracking unit 120, the control unit 130, a luggage determining unit 140, and a door control unit 150. That is, the information processing system 10 according to the seventh example embodiment further includes the luggage determining unit 140 and the door control unit 150, in addition to the configuration in the first example embodiment (see FIG. 2). Each of the luggage determining unit 140 and the door control unit 150 may be a processing block realized by the processor 11 (see FIG. 1), for example.

The luggage determining unit 140 is configured to detect or predict that the target approaching the moving body is carrying luggage. For example, the luggage determining unit 140 may detect that the target is carrying luggage, by analyzing an area around a hand in the target image. Alternatively, the luggage determining unit 140 may predict that the object is carrying luggage (e.g., holding an outer wear or the like taken off along the way) when a body shape or clothing of the target changes. The change in the body shape or clothing may be detected, by comparing the image of the target when the target moves from the inside to the outside of the moving body, with the image of the target when the target returns to the moving body. A determination result of the luggage determining unit 140 is outputted to the door control unit 150.

The door control unit 150 is configured to control opening and closing of the door of the moving body. Specifically, the door control unit 150 is configured to automatically open the door of the moving body, based on a result of the authentication processing and the determination result of the luggage determining unit 140. That is, the door control unit 150 is configured to open the door even when the target does not perform an operation for opening the door. The door control unit 150 is configured to specify and open/close the door, when the moving body is equipped with a plurality of doors. Additionally, the door control unit 150 may be configured to unlock the locked door. Hereinafter, a specific description will be given of the operation when the opening and closing of the door of the moving body is controlled (hereinafter referred to as a "door control operation" as appropriate) by the door control unit.

### (Door Control Operation)

Next, with reference to FIG. 11, a flow of the door control operations by the information processing system 10 according to the seventh example embodiment will be described. FIG. 11 is a flowchart illustrating the flow of the door control operation in the information processing system according to the seventh example embodiment.

As illustrated in FIG. 11, when the door control operation by the information processing system 10 according to the seventh example embodiment is started, first, the door control unit 150 determines whether or not the authentication processing of the target approaching the moving body is successful (step S701). When the authentication processing is not successful (the step S701: NO), the subsequent processing may be omitted. That is, processing of opening the door may not be performed by the door control unit 150.

On the other hand, when the authentication processing is successful (the step S701: YES), the door control unit 150 determines whether or not the target is carrying luggage, based on the determination result of the luggage determining unit 140 (step S702). When the target is carrying luggage (the step S702: YES), the door control unit 150 identifies a location where the target stores luggage (step S703).

The door control unit 150 may, for example, store a past behavior history of the target and identify the location where the target stores luggage, based on the behavior history. For example, in a case where it is known from the past behavior history that the target often stores luggage in a passenger seat, the passenger seat may be identified as a luggage storage location. Alternatively, the door control unit 150 may identify a passenger-free location or a location with sufficient space, as the luggage storage location. For example, the door control unit 150 may identify an empty back seat, a trunk, or the like, as the luggage storage location. Alternatively, the door control unit 150 may identify the closest location to a current position of the target, as the luggage storage location. For example, when the target is approaching a back side of the moving body, the trunk located at the back of the moving body may be identified as the luggage storage location.

Thereafter, the door control unit 150 performs processing of automatically opening the door corresponding to the identified location (step S704). The door control unit 150 may audio-output a message such as "The door will be open automatically", when opening the door. Alternatively, the door control unit 150 may perform control of turning on a lamp located around the door to be opened. Furthermore, the door control unit 150 may perform control of automatically close the door, when the target has finished storing luggage.

When the target is not carrying any luggage (the step S702: NO), the door control unit 150 performs control of unlocking the locked door (step S705).

### (Technical Effect)

Next, a technical effect obtained by the information processing system 10 according to the seventh example embodiment will be described.

As described in FIG. 10 and FIG. 11, in the information processing system 10 according to the seventh example embodiment, when the authentication processing of the target is successful and the target is carrying luggage, the processing of automatically opening the door corresponding to luggage storage location is performed. In this way, even if the target's hands are full of luggage (i.e., it is hard to open or close the door), it is possible to store luggage in the moving body through the automatically opened door.

### <Eighth Example Embodiment>

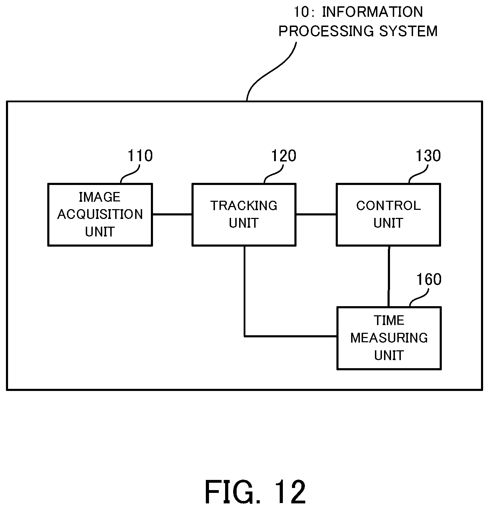

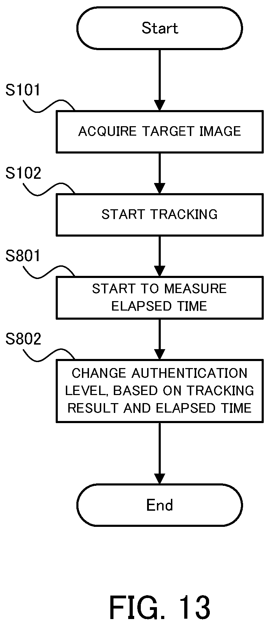

The information processing system 10 according to an eighth example embodiment will be described with reference to FIG. 12 and FIG. 13. The eighth example embodiment partially differs from the first to seventh example embodiments only in its configuration and operation, and may be the same as the first to seventh example embodiments in the other parts. For this reason, a part differing from each of the example embodiments described above will be described in detail below, and a description of the other overlapping parts will be omitted as appropriate.

### (Functional Configuration)

First, with reference to FIG. 12, a functional configuration of the information processing system 10 according to the eighth example embodiment will be described. FIG. 12 is a block diagram illustrating the functional configuration of the information processing system according to the eighth example embodiment. In FIG. 12, the same components as those illustrated in FIG. 2 carry the same reference numerals.

As illustrated in FIG. 12, the information processing system 10 according to the eighth example embodiment includes, as components for realizing the functions thereof, the image acquisition unit 110, the tracking unit 120, the control unit 130, and a time measuring unit 160. That is, the information processing system 10 according to the eighth example embodiment further includes the time measuring unit 160, in addition to the configuration in the first example embodiment (see FIG. 2). The time measuring unit 160 may be a processing block realized by the processor 11 (see FIG. 1), for example.

The time measuring unit 160 is configured to measure an elapsed time from when the target gets out of the moving body. The time measuring unit 160 may detect, from the target image, a time of the target getting out of the moving body, and may start to measure the elapsed time. Alternatively, the time measuring unit 160 may start to measure the elapsed time, at a time of the tracking of the target being started by the tracking unit 120. Information about the elapsed time measured by the time measuring unit 160 is outputted to the control unit 130. The control unit 130 according to the present example embodiment is configured to control the authentication level, based on the elapsed time measured by the time measuring unit 120, in addition to the tracking result obtained by the tracking unit 120 and.

### (Operation flow)

Next, with reference to FIG. 13, a flow of operation of the information processing system 10 according to the eighth example embodiment will be described. FIG. 13 is a flowchart illustrating the flow of the operation of the information processing system according to the eighth example embodiment. In FIG. 13, the same steps as those illustrated in FIG. 3 carry the same reference numerals.

As illustrated in FIG. 13, when the operation of the information processing system 10 according to the eighth example embodiment is started, first, the image acquisition unit 110 acquires the image of the target moving from the inside to the outside of the moving body (step S101). Then, the tracking unit 120 performs the tracking of the target getting out of the moving body, by using the target image acquired by the image acquisition unit 110 (step S102).

Then, the time measuring unit 160 measures the elapsed time from when the target gets out of the moving body (step S801). Then, the control unit 130 controls the authentication level, based on the tracking result obtained by the tracking unit 120 and the elapsed time measured by the time measuring unit 160 (step S802). For example, the control unit 130 may control the authentication level to be low, when the reliability of the tracking is high and the elapsed time is short. The control unit 130 may control the authentication level to be high, when the reliability of the tracking is low and the elapsed time is long. The control unit 130 may control the authentication level, based on an integrated score calculated from the tracking result and the elapsed time.

### (Technical Effect)

Next, a technical effect obtained by the information processing system 10 according to the eighth example embodiment will be described.

As described in FIG. 12 and FIG. 13, in the information processing system 10 according to the eighth example embodiment, the authentication level of the authentication processing is controlled based on the elapsed time from when the target gets out of the moving body, in addition to the tracking result. When the elapsed time is short, the target approaching the moving body is likely to be the same as the target having got out of the moving body. Therefore, the burden on the target may be reduced by lowering the authentication level to make it easier for the authentication processing to be successful. In addition, when the elapsed time is long, the target approaching the moving body is less likely to be the same as the target having got out of the moving body. Therefore, it is possible to prevent an inappropriate target from being permitted to move to the inside of the moving body, by raising the authentication level to make it harder for the authentication processing to be successful.

### <Ninth Example Embodiment>

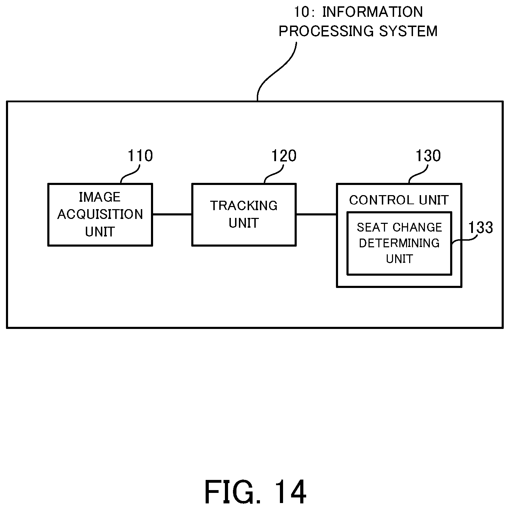

The information processing system 10 according to a ninth example embodiment will be described with reference to FIG. 14 to FIG. 16. The ninth example embodiment partially differs from the first to eighth example embodiments only in its configuration and operation, and may be the same as the first to eighth example embodiments in the other parts. For this reason, a part differing from each of the example embodiments described above will be described in detail below, and a description of the other overlapping parts will be omitted as appropriate.

### (Functional Configuration)

First, with reference to FIG. 14, a functional configuration of the information processing system 10 according to the ninth example embodiment will be described. FIG. 14 is a block diagram illustrating the functional configuration of the information processing system according to the ninth example embodiment. In FIG. 14, the same components as those illustrated in FIG. 2 carry the same reference numerals.

As illustrated in FIG. 14, the information processing system 10 according to the ninth example embodiment includes, as components for realizing the functions thereof, the image acquisition unit 110, the tracking unit 120, and the control unit 130. In particular, the control unit 130 according to the ninth example embodiment includes a seat change determining unit 133.

The seat change determining unit 133 is configured to determine a seat change of the passenger in the moving body. The seat change determining unit 133 determines the seat change, based on tracking result obtained by the tracking unit 120. For example, in a case where the target having got out of a driver's seat of the moving body enters the moving body through the passenger seat of the moving body, the seat change determining unit 133 determines that the target moves from the driver's seat to the passenger seat. When there are a plurality of passengers in the moving body, the seat change determining unit 133 may determine the seat change, for each of the plurality of passengers.

The control unit 130 according to the present example embodiment is configured to control the authentication level, based on the determination result of the seat change determining unit 133. A method of controlling the authentication level based on the seat change will be described in detail below.

### (Flow of Operation)

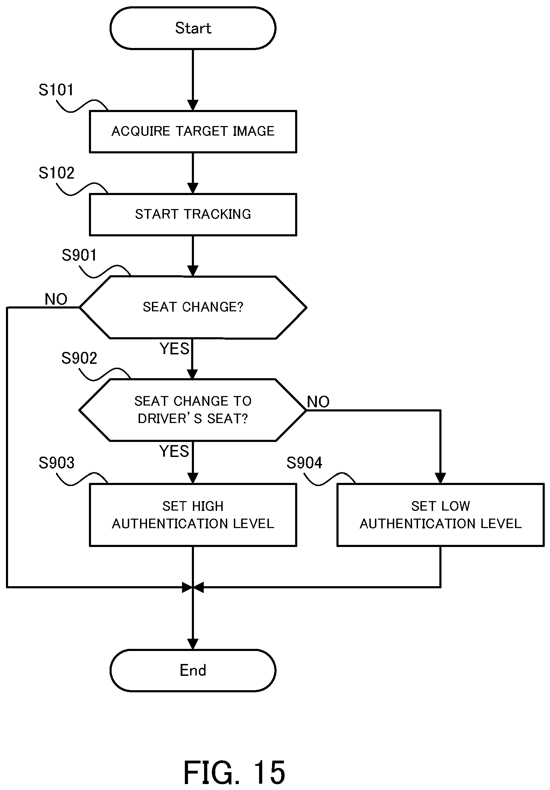

Next, with reference to FIG. 15, a flow of operation of the information processing system 10 according to the ninth example embodiment will be described. FIG. 15 is a flowchart illustrating the flow of the operation of the information processing system according to the ninth example embodiment. In FIG. 15, the same steps as those illustrated in FIG. 3 carry the same reference numerals.

As illustrated in FIG. 15, when the operation of the information processing system 10 according to the ninth example embodiment is started, first, the image acquisition unit 110 acquires the image of the target moving from the inside to the outside of the moving body (step S101). Then, the tracking unit 120 performs the tracking of the target getting out of the moving body, by using the target image acquired by the image acquisition unit 110 (step S102).

Then, the seat change determining unit 133 determines whether or not there is a seat change of the target, based on the tracking result obtained by the tracking unit 120 (step S901). When there is no seat change of the target (the step S901: NO), the subsequent processing may be omitted. In this case, as described in the other example embodiments described above, the control of the authentication level may be performed without taking the seat change into account.

On the other hand, when there is a seat change of the target (the step S901: YES), the seat change determining unit 133 determines whether or not the seat change is a change to the driver's seat (step S902). Then, when the seat change is a change to the driver's seat (the step S902: YES), the control unit 130 sets a high authentication level (step S903). That is, the authentication processing of the target changing the seat to the driver's seat is controlled to be relatively hard to be successful. On the other hand, when the seat change is a change to a seat other than the driver's seat (the step S902: NO), the control unit 130 sets a low authentication level (step S904). That is, the authentication processing of the target moving to a seat other than the driver's seat is controlled to be relatively easy to be successful.

### (Specific Example of Authentication Level Setting)

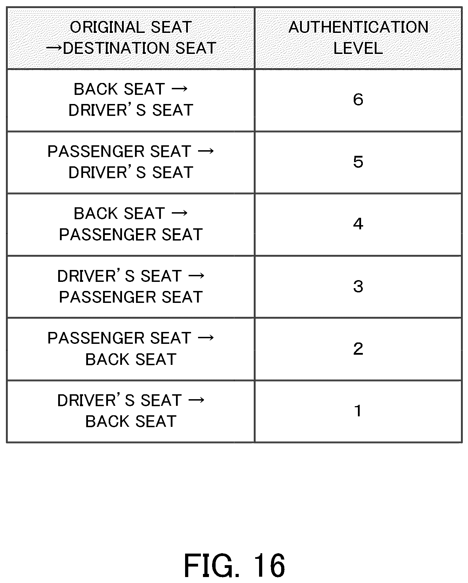

Next, with reference to FIG. 16, a specific example of authentication level setting by the information processing system 10 according to the ninth example embodiment will be described. FIG. 16 is a table illustrating an example of setting the authentication level in the information processing system according to the ninth example embodiment.

As illustrated in FIG. 16, the authentication level may be set in detail, not only depending on whether or not a destination seat is the driver's seat, but also depending on a seat type of an original seat and the destination seat. For example, the authentication level may be set depending on a degree of importance set for each seat type (e.g., the driver's seat > the passenger seat > the back seat). In this case, the authentication level may be set higher for a lower degree of importance of the seat type of the original seat, and for a higher degree of importance of the seat type of the destination seat.

Specifically, when the target moves from the back seat to the driver's seat, the authentication level may be set to "6". When the target moves from the passenger seat to the driver's seat, the authentication level may be set to "5". When the target moves from the back seat to the passenger seat, the authentication level may be set to "4". When the target moves from the driver's seat to the passenger seat, the authentication level may be set to "3". When the target moves from the passenger seat to the back seat, the authentication level may be set to "2". When the target moves from the driver's seat to the back seat, the authentication level may be set to "1".

### (Technical Effect)

Next, a technical effect obtained by the information processing system 10 according to the ninth example embodiment will be described.

As described in FIG. 14 to FIG. 16, in the information processing system 10 according to the ninth example embodiment, the authentication level is controlled based on the seat change of the target. In this way, the authentication level may be controlled by taking into account the degree of importance of the seats in the mobile vehicle. In particular, the driver's seat in the mobile vehicle is a seat on which the driver is seated, and is therefore more important than the other seats that are not related to the driving. Therefore, it is possible to perform more appropriate authentication processing, by setting a high authentication level for the target changing the seat to the driver's seat.

### <Tenth Example Embodiment>

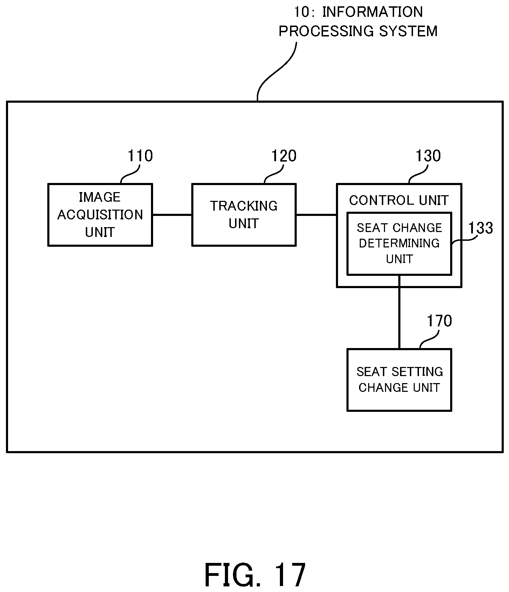

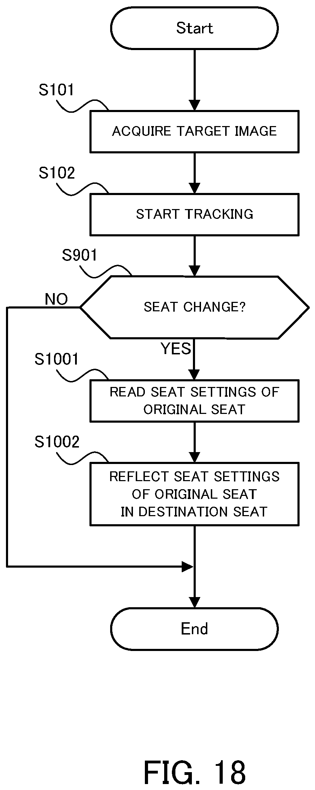

The information processing system 10 according to a tenth example embodiment will be described with reference to FIG. 17 and FIG. 18. The tenth example embodiment partially differs from the ninth example embodiment only in its configuration and operation, and may be the same as the first to ninth example embodiments in the other parts. For this reason, a part differing from each of the example embodiments described above will be described in detail below, and a description of the other overlapping parts will be omitted as appropriate.

### (Functional Configuration)

First, with reference to FIG. 17, a functional configuration of the information processing system 10 according to the tenth example embodiment will be described. FIG. 17 is a block diagram illustrating the functional configuration of the information processing system according to the tenth example embodiment. In FIG. 17, the same components as those illustrated in FIG. 14 carry the same reference numerals.

As illustrated in FIG. 17, the information processing system 10 according to the eighth example embodiment includes, as components for realizing the functions thereof, the image acquisition unit 110, the tracking unit 120, the control unit 130 including the seat determination unit 133, and a seat setting change unit 170. That is, the information processing system 10 according to the tenth example embodiment further includes the seat setting change unit 170, in addition to the configuration in the ninth example embodiment (see FIG. 14). The seat setting change unit 170 may be a processing block realized by the processor 11 (see FIG. 1), for example.

The seat setting change unit 170 is configured to change various settings for the seats. For example, the seat setting change unit 170 is configured to automatically change, for each seat, the settings that area adjustable in each seat, such as an angle of the seat (reclining), heating level of a seat heater, and a direction and power of an air conditioner.

### (Flow of Operation)

Next, with reference to FIG. 18, a flow of operation of the information processing system 10 according to the tenth example embodiment will be described. FIG. 18 is a flowchart illustrating the flow of the operation of the information processing system according to the tenth example embodiment. In FIG. 18, the same steps as those illustrated in FIG. 3 carry the same reference numerals.

As illustrated in FIG. 18, when the operation of the information processing system 10 according to the tenth example embodiment is started, first, the image acquisition unit 110 acquires the image of the target moving from the inside to the outside of the moving body (step S101). Then, the tracking unit 120 performs the tracking of the target getting out of the moving body, by using the target image acquired by the image acquisition unit 110 (step S102).

Then, the seat change determining unit 133 determines whether or not there is a seat change of the target, based on the tracking result obtained by the tracking unit 120 (step S901). When there is no seat change of the target (the step S901: NO), the subsequent processing may be omitted.

On the other hand, when there is a seat change of the target (the step S901: YES), the seat setting change unit 170 reads seat settings of the original seat of the target (step S1001). Then, the seat setting change unit 170 reflects the seat settings of the original seat, in the destination seat of the target (step S1002). For example, in a case where the target moves from the driver's seat to the passenger seat, the seat setting change unit 170 reflects the seat settings of the driver's seat in the passenger seat.

### (Technical Effect)

Next, a technical effect obtained by the information processing system 10 according to the tenth example embodiment will be described.

As described in FIG. 17 and FIG. 18, in the information processing system 10 according to the tenth example embodiment, when there is a seat change of the target, the seat settings of the original seat are reflected in the destination seat. A preference for the seat settings varies depending on the target. Furthermore, the seat settings of the original seat are considered to have already been adjusted into a preferable state of the target. Therefore, the seat settings of the destination seat may be automatically changed into the preferable state of the target, by reflecting the seat settings of the original seat in the destination seat. This makes it possible to improve the convenience of the target.

<Eleventh Example Embodiment>

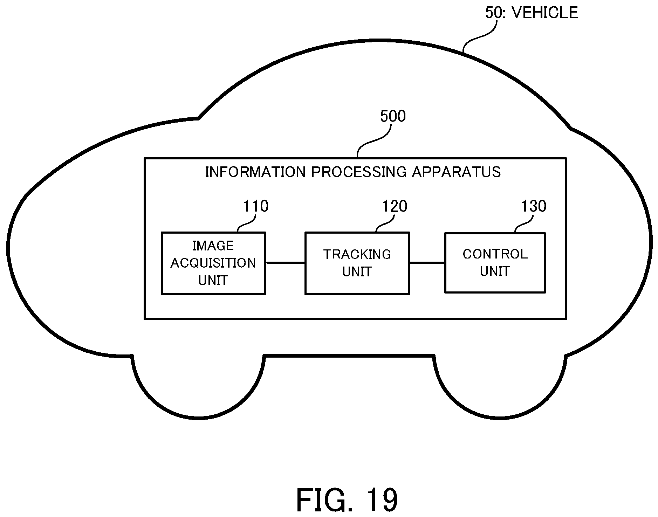

An information processing apparatus according to an eleventh example embodiment will be described with reference to FIG. 19. The information processing apparatus according to the eleventh example embodiment is configured such that the information processing system 10 described in the first to tenth example embodiments is a single apparatus, and may be the same as the information processing system 10 described above in its configuration and operation. For this reason, a part differing from each of the example embodiments described above will be described in detail below, and a description of the other overlapping parts will be omitted as appropriate.

### (Functional Configuration)

First, with reference to FIG. 19, a functional configuration of the information processing apparatus according to the eleventh example embodiment will be described. FIG. 19 is a block diagram illustrating the functional configuration of the information processing apparatus according to the eleventh example embodiment. In FIG. 19, the same components as those illustrated in FIG. 2 carry the same reference numerals.

As illustrated in FIG. 19, an information processing apparatus 500 according to the eleventh example embodiment includes, as components for realizing the functions thereof, the image acquisition unit 110, the tracking unit 120, and the control unit 130. That is, the information processing apparatus 500 according to the eleventh example embodiment includes the same components as those of the information processing system 10 according to the first example embodiment (see FIG. 2).

The information processing apparatus 500 according to the eleventh example embodiment is configured as an apparatus mounted on the vehicle 50. The information processing apparatus 500 may be configured, for example, by an electronic control unit (ECU) provided in the vehicle 50, or the like. The image acquisition unit 110 may be configured to acquire the target image, for example, from an in-vehicle camera. The tracking unit 120 may be configured to perform the tracking of the passenger of the vehicle 50. The control unit 130 may be configured to control the authentication level of the authentication processing to be performed on the target moving from an outside to an inside of the vehicle.

### (Technical Effect)

Next, a technical effect obtained by the information processing apparatus 500 according to the eleventh example embodiment will be described.

In the information processing apparatus 500 according to the eleventh example embodiment, the tracking of the target moving from the inside to the outside of the vehicle 50 is performed, and the authentication level of the authentication processing in the vehicle 50 is changed based on the tracking result. In this way, it is possible to perform appropriate biometric authentication on the target having been away from the vehicle 50 for a relatively short time, without unnecessarily increasing the burden on the target.

A processing method that is executed on a computer by recording, on a recording medium, a program for allowing the configuration in each of the example embodiments to be operated so as to realize the functions in each example embodiment, and by reading, as a code, the program recorded on the recording medium, is also included in the scope of each of the example embodiments. That is, a computer-readable recording medium is also included in the range of each of the example embodiments. Not only the recording medium on which the above-described program is recorded, but also the program itself is also included in each example embodiment.

The recording medium to use may be, for example, a floppy disk (registered trademark), a hard disk, an optical disk, a magneto-optical disk, a CD-ROM, a magnetic tape, a nonvolatile memory card, or a ROM. Furthermore, not only the program that is recorded on the recording medium and that executes processing alone, but also the program that operates on an OS and that executes processing in cooperation with the functions of expansion boards and another software, is also included in the scope of each of the example embodiments. In addition, the program itself may be stored in a server, and a part or all of the program may be downloaded from the server to a user terminal. The program may be provided to a user in a form of SaaS (Software as a Service), for example.

### <Supplementary Notes>

The example embodiments described above may be further described as, but not limited to, the following Supplementary Notes below.

### (Supplementary Note 1)

An information processing system according to Supplementary Note 1 is an information processing system including: an image acquisition unit that acquires an image of a target moving from an inside to an outside of a predetermined area; a tracking unit that performs tracking of the target included in the image; and a control unit that controls an authentication level of authentication processing to be performed on the target moving from the outside to the inside of the predetermined area, based on a result of the tracking.

### (Supplementary Note 2)

An information processing system according to Supplementary Note 2 is the information processing system according to Supplementary Note 1, wherein the authentication processing is biometric authentication using biometric information on the target.

### (Supplementary Note 3)

An information processing system according to Supplementary Note 3 is the information processing system according to Supplementary Note 1 or 2, wherein the inside of the predetermined area is an inside of a moving body, and the outside of the predetermined area is an outside of the moving body.

### (Supplementary Note 4)

An information processing system according to Supplementary Note 4 is the information processing system according to Supplementary Note 3, wherein the control unit: calculates a tracking score indicating reliability of the tracking, based on the result of the tracking; and determines necessity of the authentication processing at a time of the target moving from the outside to the inside of the moving body, depending on the tracking score.

### (Supplementary Note 5)

An information processing system according to Supplementary Note 5 is the information processing system according to Supplementary Note 4, wherein the authentication processing is face authentication and liveness determination of the target, and the control unit controls the authentication level of the authentication processing to permit a first target to move to the inside of the moving body, without performing the face authentication and the liveness determination, the first target approaching the moving body in a state in which the tracking score exceeds a first threshold.

### (Supplementary Note 6)

An information processing system according to Supplementary Note 6 is the information processing system according to Supplementary Note 5, wherein the control unit controls the authentication level of the authentication processing to permit a second target to move to the inside of the moving body, in response to a success in both the face authentication and the liveness determination, the second target approaching the moving body in a state in which the tracking score falls below a second threshold that is lower than the first threshold.

### (Supplementary Note 7)

An information processing system according to Supplementary Note 7 is the information processing system according to Supplementary Note 6, wherein the control unit controls the authentication level of the authentication processing to permit a third target to move to the inside of the moving body, in response to a success in at least one of the face authentication and the liveness determination, the third target approaching the moving body in a state in which the tracking score falls below the first threshold and exceeds the second threshold.

### (Supplementary Note 8)

An information processing system according to Supplementary Note 8 is the information processing system according to any one of Supplementary Note 4 to 7, wherein the tracking unit performs tracking of a plurality of targets moving from the inside to the outside of the moving body, and the control unit sets a width of reduction in the tracking score caused by the plurality of targets passing each other, to be smaller than a width of reduction in the tracking score caused by the plurality of targets passing a third party that is different from the plurality of targets.

### (Supplementary Note 9)

An information processing system according to Supplementary Note 9 is the information processing system according to any one of Supplementary Note 3 to 8, further including: a door control unit that controls opening and closing of a door of the moving body, depending on a result of the authentication processing; and a luggage determining unit that detects or predicts that the target approaching the moving body is carrying luggage, wherein the door control unit automatically opens the door of the moving body to be used by the target to store luggage, in response to a success in the authentication processing and in response to a detection or a prediction that the target is carrying luggage.

### (Supplementary Note 10)

An information processing system according to Supplementary Note 10 is the information processing system according to any one of Supplementary Note 3 to 9, further including a measurement unit that measures an elapsed time from a time of the target getting out of the moving body, wherein the control unit controls the authentication level of the authentication processing, based on the result of the tracking and the elapsed time.

### (Supplementary Note 11)

An information processing system according to Supplementary Note 11 is the information processing system according to any one of Supplementary Note 3 to 10, wherein the control unit determines a seat change of the target in the moving body, based on the result of the tracking, and controls the authentication level of the authentication processing such that the authentication processing of the target moving to a driver's seat of the moving body is harder to be successful than the authentication processing of the target moving to a seat other than the driver's seat.

### (Supplementary Note 12)

An information processing apparatus according to Supplementary Note 12 is an information processing apparatus including: an image acquisition unit that acquires an image of a target moving from an inside to an outside of a predetermined area; a tracking unit that performs tracking of the target included in the image; and a control unit that controls an authentication level of authentication processing to be performed on the target moving from the outside to the inside of the predetermined area, based on a result of the tracking.

### (Supplementary Note 13)

An information processing method according to Supplementary Note 13 is an information processing method that is executed by at least one computer, the information processing method including: acquiring an image of a target moving from an inside to an outside of a predetermined area; performing tracking of the target included in the image; and controlling an authentication level of authentication processing to be performed on the target moving from the outside to the inside of the predetermined area, based on a result of the tracking.

### (Supplementary Note 14)

A recording medium according to Supplementary Note 14 is a recording medium on which a computer program that allows at least one computer to execute an information processing method is recorded, the information processing method including: acquiring an image of a target moving from an inside to an outside of a predetermined area; performing tracking of the target included in the image; and controlling an authentication level of authentication processing to be performed on the target moving from the outside to the inside of the predetermined area, based on a result of the tracking.

### (Supplementary Note 15)

A computer program according to Supplementary Note 15 is a computer program that allows at least one computer to execute an information processing method, the information processing method including: acquiring an image of a target moving from an inside to an outside of a predetermined area; performing tracking of the target included in the image; and controlling an authentication level of authentication processing to be performed on the target moving from the outside to the inside of the predetermined area, based on a result of the tracking.

The present disclosure is allowed to be changed, if desired, without departing from the essence or spirit of this disclosure which can be read from the claims and the entire specification. An information processing system, an information processing apparatus, an information processing method, and a recording medium with such changes are also intended to be within the technical scope of the present disclosure.

### Description of Reference Codes

10 Information processing system
11 Processor
50 Vehicle
110 Image acquisition unit
120 Tracking unit
130 Control unit
131 Tracking score calculating unit
132 Authentication necessity determining unit
133 Seat change determining unit
140 Luggage determining unit
150 Door control unit
160 Time measuring unit
170 Seat setting change unit
500 Information processing apparatus

## Claims

1. An information processing system comprising:
an image acquisition unit that acquires an image of a target moving from an inside to an outside of a predetermined area;
a tracking unit that performs tracking of the target included in the image; and
a control unit that controls an authentication level of authentication processing to be performed on the target moving from the outside to the inside of the predetermined area, based on a result of the tracking.

2. The information processing system according to claim 1, wherein the authentication processing is biometric authentication using biometric information on the target.

3. The information processing system according to claim 1 or 2, wherein the inside of the predetermined area is an inside of a moving body, and the outside of the predetermined area is an outside of the moving body.

4. The information processing system according to claim 3, wherein the control unit:
calculates a tracking score indicating reliability of the tracking, based on the result of the tracking; and
determines necessity of the authentication processing at a time of the target moving from the outside to the inside of the moving body, depending on the tracking score.

5. The information processing system according to claim 4, wherein
the authentication processing is face authentication and liveness determination of the target, and
the control unit controls the authentication level of the authentication processing to permit a first target to move to the inside of the moving body, without performing the face authentication and the liveness determination, the first target approaching the moving body in a state in which the tracking score exceeds a first threshold.

6. The information processing system according to claim 5, wherein the control unit controls the authentication level of the authentication processing to permit a second target to move to the inside of the moving body, in response to a success in both the face authentication and the liveness determination, the second target approaching the moving body in a state in which the tracking score falls below a second threshold that is lower than the first threshold.

7. The information processing system according to claim 6, wherein the control unit controls the authentication level of the authentication processing to permit a third target to move to the inside of the moving body, in response to a success in at least one of the face authentication and the liveness determination, the third target approaching the moving body in a state in which the tracking score falls below the first threshold and exceeds the second threshold.

8. The information processing system according to claim 3, wherein
the tracking unit performs tracking of a plurality of targets moving from the inside to the outside of the moving body, and
the control unit sets a width of reduction in the tracking score caused by the plurality of targets passing each other, to be smaller than a width of reduction in the tracking score caused by the plurality of targets passing a third party that is different from the plurality of targets.

9. The information processing system according to claim 3, further comprising:
a door control unit that controls opening and closing of a door of the moving body, depending on a result of the authentication processing; and
a luggage determining unit that detects or predicts that the target approaching the moving body is carrying luggage,
wherein
the door control unit automatically opens the door of the moving body to be used by the target to store luggage, in response to a success in the authentication processing and in response to a detection or a prediction that the target is carrying luggage.

10. The information processing system according to claim 3, further comprising
a measurement unit that measures an elapsed time from a time of the target getting out of the moving body, wherein
the control unit controls the authentication level of the authentication processing, based on the result of the tracking and the elapsed time.

11. The information processing system according to claim 3, wherein the control unit determines a seat change of the target in the moving body, based on the result of the tracking, and controls the authentication level of the authentication processing such that the authentication processing of the target moving to a driver's seat of the moving body is harder to be successful than the authentication processing of the target moving to a seat other than the driver's seat.

12. An information processing apparatus comprising:
an image acquisition unit that acquires an image of a target moving from an inside to an outside of a predetermined area;
a tracking unit that performs tracking of the target included in the image; and
a control unit that controls an authentication level of authentication processing to be performed on the target moving from the outside to the inside of the predetermined area, based on a result of the tracking.

13. An information processing method that is executed by at least one computer, the information processing method comprising:
acquiring an image of a target moving from an inside to an outside of a predetermined area;
performing tracking of the target included in the image; and
controlling an authentication level of authentication processing to be performed on the target moving from the outside to the inside of the predetermined area, based on a result of the tracking.

14. A recording medium on which a computer program that allows at least one computer to execute an information processing method is recorded, the information processing method including:
acquiring an image of a target moving from an inside to an outside of a predetermined area;
performing tracking of the target included in the image; and
controlling an authentication level of authentication processing to be performed on the target moving from the outside to the inside of the predetermined area, based on a result of the tracking.
